# EUROPÄISCHE PATENTSCHRIFT

(11) **EP 2 033 296 B1**
(45) Veröffentlichungstag und Bekanntmachung des Hinweises auf die Patenterteilung: **24.04.2019**
(21) Anmeldenummer: 07725698.0
(22) Anmeldetag: 31.05.2007
(51) Int. Cl.: H02K 5/128, H02K 11/30, H02K 9/22, H02K 7/14, H02K 5/22

(54) **UMWÄLZPUMPE MIT MOTOR, MOTORSTEUERUNG UND DEREN KÜHLUNG**
CIRCULATING PUMP WITH A MOTOR, MOTOR CONTROLLER AND ITS COOLING
POMPE DE CIRCULATION, COMMANDE DU MOTEUR ET SON REFROIDISSEMENT

(30) Priorität: 02.06.2006 DE 102006026678
(43) Veröffentlichungstag der Anmeldung: 11.03.2009
(73) Patentinhaber: Xylem IP Holdings LLC, White Plains, NY 10604 (US)
(72) Erfinder: LAING, Karsten, 71566 Althütte (DE)
(74) Vertreter: Lenzing Gerber Stute
(86) Internationale Anmeldenummer: PCT/EP2007/004811
(87) Internationale Veröffentlichungsnummer: WO 2007/140921

(56) Entgegenhaltungen:
- EP-A1- 0 456 169
- EP-A1- 0 913 910
- EP-A2- 1 361 368
- DE-A1- 3 342 967
- DE-A1- 19 646 617
- DE-C1- 4 435 511
- DE-U1- 8 811 420
- JP-A- 11 234 948

## Beschreibung

Die Erfindung betrifft eine Umwälzpumpe, umfassend einen Elektromotor mit einem Stator, einem Rotor und einer Motorschaltung, und ein Gehäuse, in welchem der Elektromotor angeordnet ist. Der Erfindung liegt dabei die Aufgabe zugrunde, eine Umwälzpumpe bereitzustellen, welche kostengünstig hergestellt ist.

Dieses Aufgabe wird bei der eingangs genannten Umwälzpumpe erfindungsgemäß dadurch gelöst, dass das Gehäuse eine erste Kammer aufweist, in welcher der Stator und der Rotor angeordnet sind, und eine von der ersten Kammer getrennte zweite Kammer aufweist, an welcher mindestens ein Träger positioniert ist, an welchem mindestens ein Teil der Motorschaltung angeordnet ist, und dass die erste Kammer und die zweite Kammer über mindestens eine Verbindungsöffnung verbunden sind, über welche mindestens ein elektrisches Element der Motorschaltung, welches an dem mindestens einen Träger angeordnet ist, in thermischem Kontakt mit dem Stator in der ersten Kammer steht.

Der Stator lässt sich über Förderflüssigkeit der Umwälzpumpe (wie beispielsweise Wasser) kühlen. Beispielsweise weist die Förderflüssigkeit eine Höchsttemperatur auf, welche im Bereich zwischen 95°C und 110°C liegt. Der Stator kann Temperaturen entwickeln, welche im Bereich bei ca. 130°C liegen. Es lässt sich dadurch eine effektive Kühlung erreichen.

Wenn ein oder mehrere elektrische Elemente der Motorschaltung über die Verbindungsöffnung in thermischem Kontakt mit dem Stator stehen, dann lassen sich diese über die Förderflüssigkeit kühlen, das heißt es ist eine Mediumkühlung bereitgestellt. Dadurch lässt sich effektiv Wärme abführen. Beispielsweise werden elektronische Leistungsbauelemente der Motorschaltung entsprechend gekühlt.

Mittels der erfindungsgemäßen Lösung ist es möglich, in der zweiten Kammer (welche einen "Schaltschrank" für den Elektromotor bildet) einen Träger zu positionieren, an dem sowohl Niedertemperaturschaltungselemente als auch Hochtemperaturschaltungselemente positionierbar sind. Die Niedertemperaturschaltungselemente weisen eine geringere Wärmeentwicklung als die Hochtemperaturschaltungselemente auf. Die Niedertemperaturschaltungselemente lassen sich über Luftkühlung kühlen. Die Hochtemperaturschaltungselemente lassen sich über die Förderflüssigkeit aufgrund der thermischen Verbindung mit dem Stator kühlen.

Insbesondere ist der Stator in der ersten Kammer über Förderflüssigkeit kühlbar. Damit ist dann auch das mindestens eine elektrische Element der Motorschaltung, welches über die Verbindungsöffnung mit dem Stator in thermischen Kontakt steht, über Förderflüssigkeit kühlbar.

Es ist ferner vorgesehen, dass die zweite Kammer luftkühlbar ist.

Günstig ist es, wenn der mindestens eine Träger einen Niedertemperaturbereich und einen Hochtemperaturbereich aufweist, wobei der Niedertemperaturbereich luftgekühlt ist und der Hochtemperaturbereich über Förderflüssigkeit gekühlt ist. Dadurch lassen sich an demselben Träger sowohl Niedertemperaturschaltungselemente anordnen, für die eine Luftkühlung ausreicht, als auch Hochtemperaturschaltungselemente, die über Förderflüssigkeit gekühlt sind. Die entsprechende Umwälzpumpe lässt sich auf einfache und kostengünstige Weise herstellen. Insbesondere lassen sich kostengünstige Niedertemperaturschaltungselemente einsetzen.

Ganz besonders vorteilhaft ist es, wenn elektrische Elemente des Niedertemperaturbereichs an einer Seite des mindestens einen Trägers angeordnet sind, welche der ersten Kammer abgewandt sind. Dadurch ist für eine effektive thermische Entkopplung gesorgt, wobei der Träger zwischen der ersten Kammer und den elektrischen Elementen liegt.

Es ist dann auch günstig, wenn elektrische Elemente des Hochtemperaturbereichs an einer Seite des mindestens einen Trägers angeordnet sind, welche der ersten Kammer zugewandt ist. Dadurch lässt sich auf einfache Weise ein thermischer Kontakt mit dem Stator, welcher in der ersten Kammer sitzt, erreichen.

Ganz besonders vorteilhaft ist es, wenn zwischen der ersten Kammer und der zweiten Kammer ein Zwischenraum zur Bildung eines Luftspalts liegt. Über diesen Zwischenraum ist eine Luftspalttrennung zwischen der ersten Kammer und der zweiten Kammer bereitgestellt. Dadurch lassen sich die erste Kammer und die zweite Kammer thermisch entkoppeln.

Günstig ist es, wenn der Zwischenraum zum Außenraum hin offen ist. Dadurch kann Luft durch den Zwischenraum strömen, um für eine Luftkühlung zu sorgen. Ferner wird durch die Luft im Zwischenraum für eine thermische Entkopplung zwischen der ersten Kammer und der zweiten Kammer gesorgt.

Günstigerweise ist die mindestens eine Verbindungsöffnung gegenüber dem Zwischenraum geschlossen, so dass sie gegenüber dem Außenraum geschlossen ist.

Günstig ist es, wenn der Zwischenraum einen Luftspalt umfasst. Über den Luftspalt sind die erste Kammer und die zweite Kammer thermisch entkoppelt. Dadurch ist es beispielsweise möglich, elektrische Elemente, welche an dem Träger in der ersten Kammer angeordnet sind, über Luftkühlung zu kühlen, wenn sie nur eine geringe Wärmeentwicklung aufweisen.

Ganz besonders vorteilhaft ist es, wenn ein Niedertemperaturbereich des mindestens einen Trägers (direkt) unterhalb des Luftspalts liegt. Dadurch ist für eine effektive thermische Entkopplung zwischen elektrischen Elementen des Niedertemperaturbereichs und der ersten Kammer gesorgt.

Bei einer Ausführungsform liegt die zweite Kammer unterhalb der ersten Kammer. Dadurch lässt sich auf einfache Weise eine thermische Kontaktierung zwischen dem mindestens einen Element der Rotorschaltung und dem Stator erreichen.

Günstig ist es, wenn die erste Kammer zur zweiten Kammer hin eine Stirnwand aufweist. Diese Stirnwand schließt die erste Kammer ab.

Aus dem gleichen Grund ist es günstig, wenn die zweite Kammer zur ersten Kammer hin eine Stirnwand aufweist, welche beabstandet zur Stirnwand der ersten Kammer ist. Über die beabstandeten Stirnwände lässt sich ein Zwischenraum zwischen den beiden Kammern herstellen, welcher zur Luftspalttrennung dient.

Bei einer Ausführungsform weist die Stirnwand der ersten Kammer an einer Innenseite eine Ausnehmung zur Aufnahme einer Kontaktplatine des Stators auf. Die Innenseite der Stirnwand der ersten Kammer dient insbesondere zur Positionierung des Stators in der ersten Kammer. In der Ausnehmung lässt sich eine Kontaktplatine positionieren, über welche Spulen des Stators elektrisch mit der Motorschaltung verbunden sind.

Ganz besonders vorteilhaft ist es, wenn das Gehäuse einstückig ausgebildet ist. Es ist insbesondere aus Kunststoff beispielsweise über Spritzgießen hergestellt. Dadurch sind die Zusammenbauschritte bei der Herstellung der Umwälzpumpe gering gehalten.

Günstig ist es, wenn in der ersten Kammer Positionierelemente für den Stator angeordnet sind. Über die Positionierelemente lässt sich bei der Herstellung der Umwälzpumpe der Stator in der ersten Kammer positionieren und insbesondere zentrieren. Dadurch ist die Herstellung vereinfacht.

Günstig ist es, wenn eine Trennfläche zwischen dem Stator und dem Rotor dem Rotor zugewandt sphärisch ausgebildet ist. Der Elektromotor der Umwälzpumpe weist dadurch einen hohen Wirkungsgrad auf.

Aus dem gleichen Grund ist es günstig, wenn der Rotor dem Stator zugewandt eine sphärische Oberfläche hat.

Der Rotor ist insbesondere über einen oder mehrere Permanentmagnete magnetfelderzeugend. Der Elektromotor und damit die Umwälzpumpe weisen dadurch einen hohen Wirkungsgrad auf.

Günstig ist es, wenn der Rotor sphärisch gelagert ist. Eine solche Lagerung weist einen geringen Verschleiß und im Betrieb eine geringe Geräuschentwicklung auf.

Die nachfolgende Beschreibung bevorzugter Ausführungsformen dient im Zusammenhang mit der Zeichnung der näheren Erläuterung der Erfindung. Es zeigen:
- Figur 1: eine Draufsicht auf ein Ausführungsbeispiel einer Umwälzpumpe;
- Figur 2: eine Schnittansicht längs der Linie 2-2 gemäß Figur 1;
- Figur 3: eine Schnittansicht längs der Linie 3-3 gemäß Figur 2;
- Figur 4: eine Schnittansicht längs der Linie 4-4 gemäß Figur 3;
- Figur 5: eine perspektivische Teildarstellung eines Ausführungsbeispiels eines erfindungsgemäßen Stators;
- Figur 6: eine Draufsicht auf den (Teil-)Stator gemäß Figur 5 in der Richtung A (von oben);
- Figur 7: eine Draufsicht auf den (Teil-)Stator gemäß Figur 5 in der Richtung B (von unten);
- Figur 8: eine Schnittansicht durch den (Teil-)Stator gemäß Figur 5;
- Figur 9: eine perspektivische Darstellung eines Ausführungsbeispiels eines erfindungsgemäßen Spulenmoduls; und
- Figur 10: eine Draufsicht auf ein Ausführungsbeispiel eines Aufsatzes.

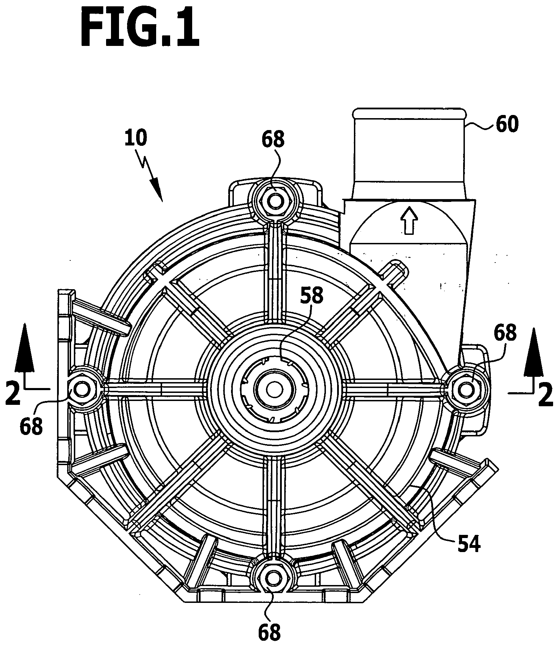

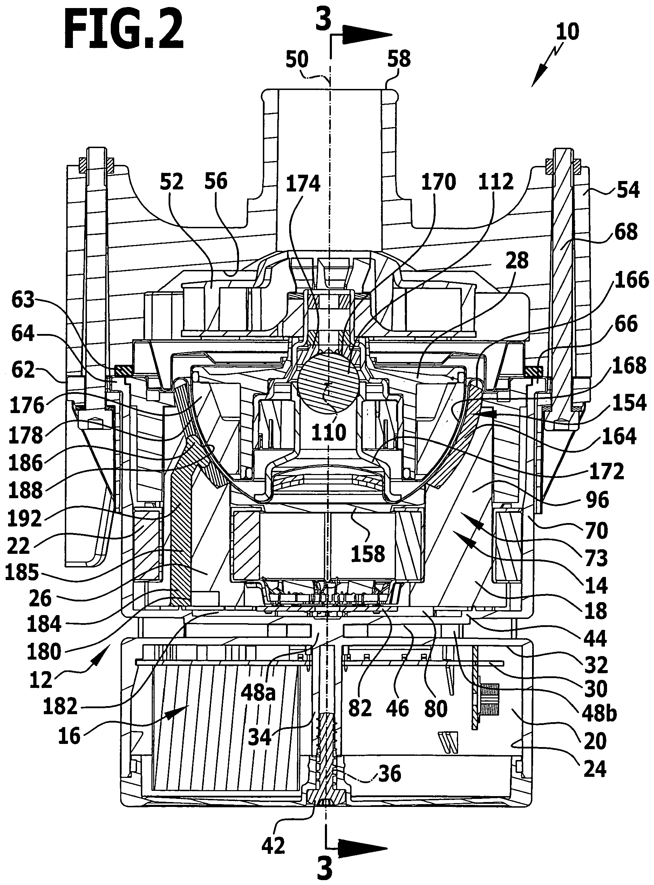

Ein Ausführungsbeispiel einer erfindungsgemäßen Umwälzpumpe, welches in den Figuren 1 und 2 gezeigt und dort mit 10 bezeichnet ist, umfasst ein Gehäuse 12. In dem Gehäuse 12 ist ein Elektromotor 14 mit einer elektrischen Motorschaltung 16 angeordnet.

Das Gehäuse 12 weist eine erste Kammer 18 und eine von der ersten Kammer 18 getrennte zweite Kammer 20 auf. Die erste Kammer 18 hat einen im Wesentlichen zylindrischen Innenraum 22. Die zweite Kammer 20 hat ebenfalls einen im Wesentlichen zylindrischen Innenraum 24.

In der ersten Kammer 18 ist ein Stator 26 und ein Rotor 28 des Elektromotors 14 angeordnet.

In der zweiten Kammer 20 ist ein Träger 30 angeordnet, bei welchem es sich insbesondere um eine Trägerplatine handelt, an welcher die Motorschaltung 16 oder zumindest Hauptkomponenten der Motorschaltung 16 sitzen. Die zweite Kammer 20 dient als "Schaltschrank" für den Elektromotor 14.

Die zweite Kammer 20 weist zu der ersten Kammer 18 hin eine Stirnwand 32 auf. An der Stirnwand 32 sitzt in den Innenraum 24 weisend ein Stiftelement 34. Dieses Stiftelement 34 ist insbesondere koaxial zu einer Mittelachse 36 des Gehäuses 12 angeordnet. Vorzugsweise weisen die erste Kammer 18 und die zweite Kammer 20 eine Mittelachse auf, welche mit der Mittelachse 36 zusammenfällt. An dem Stiftelement 34 ist der Träger 30 beabstandet zu der Stirnwand 32 fixiert.

Auf dem Träger 30 sind elektrische Schaltungselemente und Verbindungsleitungen beispielsweise in der Form von Leiterbahnen angeordnet. Es handelt sich dabei insbesondere um diskrete Schaltungselemente und integrierte Schaltungselemente. Die Motorschaltung 16 umfasst ein oder mehrere elektronische Leistungsschaltungselemente 38, wie beispielsweise ein oder mehrere Thyristoren, welche an dem Träger 30 angeordnet sind.

Die zweite Kammer 20 ist nach außen hin über ein Deckelelement 40 geschlossen, welches beispielsweise über eine Schraube 42 an dem Stiftelement 34 fixiert ist.

Die erste Kammer 18 weist eine Stirnwand 44 zu der zweiten Kammer 20 hin auf. Diese Stirnwand 44 ist beabstandet zu der Stirnwand 32 der zweiten Kammer 20. Zwischen der Stirnwand 44 und der Stirnwand 32 ist ein Zwischenraum 46 gebildet, welcher zu dem Außenraum offen ist und einen Luftspalt umfasst. Zwischen einer Außenseite der Stirnwand 32 und einer Außenseite der Stirnwand 44 sind dabei Stegelemente 48a, 48b usw. angeordnet, welche die Stirnwand 44 und die Stirnwand 32 unter Bildung des Zwischenraums 46 auf Abstand halten.

Das Gehäuse 12 ist vorzugsweise einstückig ausgebildet. Insbesondere sind die Stirnwände 32 und 44 mit entsprechenden Kammerwänden einstückig ausgebildet.

Die zweite Kammer 20 mit der Motorschaltung 16 ist luftgekühlt. Durch den Zwischenraum 46 ist die zweite Kammer 20 thermisch von der ersten Kammer 18 getrennt, wobei Luft den Zwischenraum 46 durchströmen kann bzw. ein Luftpolster im Zwischenraum 46 liegt.

Der Rotor 28 ist um eine Drehachse 50 rotierbar, welche mit der Mittelachse 36 zusammenfällt. Mit dem Rotor 28 drehfest verbunden ist ein Schaufelrad 52 zur Förderung einer Flüssigkeit.

An dem Gehäuse 12 ist ein oberes Deckelelement 54 angeordnet, welches eine Ausnehmung 56 aufweist, in welcher das Schaufelrad 52 rotierbar ist. Das obere Deckelelement 54 umfasst einen ersten Anschlussstutzen 58, welcher beispielsweise koaxial zur Mittelachse 36 ausgerichtet ist. Über diesen ersten Anschlussstutzen 58 ist Förderflüssigkeit in den Innenraum 56 einführbar. Über den ersten Anschlussstutzen 58 ist eine Saugseite der Umwälzpumpe 10 definiert.

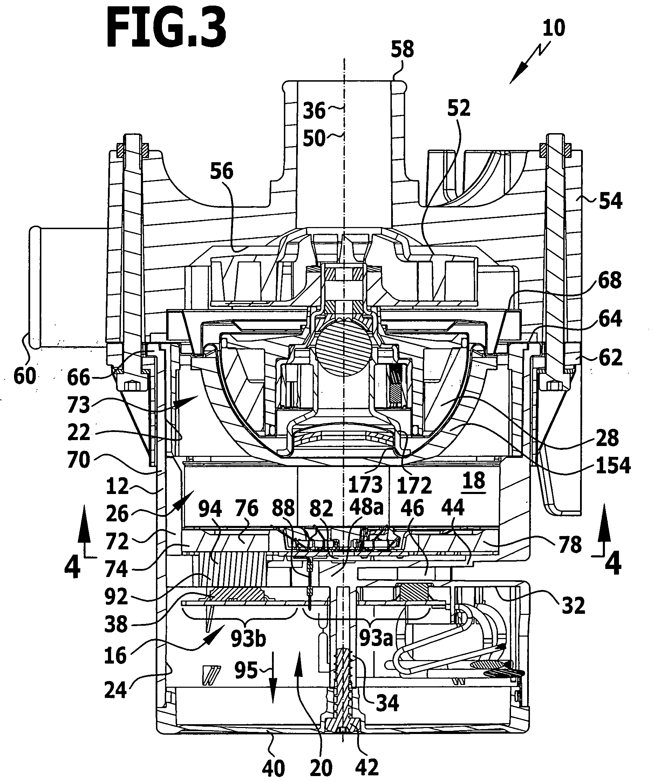

An dem oberen Deckelelement 54 ist ferner ein zweiter Anschlussstutzen 60 angeordnet (Figuren 1 und 3), welcher beispielsweise quer und insbesondere senkrecht zu der Mittelachse 36 orientiert ist. Über diesen zweiten Anschlussstutzen 60 ist geförderte Flüssigkeit abführbar. Der zweite Anschlussstutzen 60 definiert eine Druckseite der Umwälzpumpe 10.

Das obere Deckelelement 54 ist an dem Gehäuse 12 beispielsweise über einen Flansch 62 fixiert. Dazu weist das Gehäuse 12 an seinem oberen Ende 64, welches der zweiten Kammer 20 abgewandt ist, einen nach außen ragenden Ringbereich 66 auf. Der Flansch 62 liegt von unten her an dem Ringbereich 66 an. Über Verspannelemente 68, wie beispielsweise Schrauben oder Bolzen, wird das obere Deckelelement 54 mit dem Flansch 62, welcher insbesondere als Ringflansch ausgebildet ist, verspannt und dadurch an dem Gehäuse 12 gehalten, wobei eine fluiddichte Fixierung mittels eines O-Rings 63 hergestellt ist.

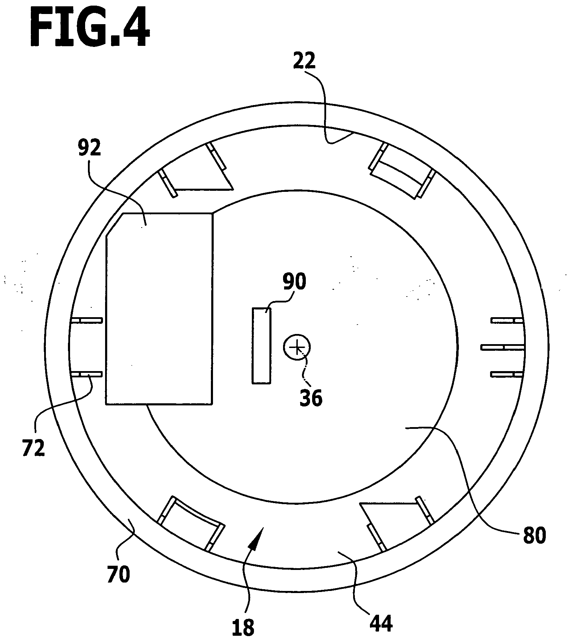

In den Innenraum 22 der ersten Kammer 18 weisend sind an einer Kammerwand 70 Positionierelemente 72 angeordnet (Figuren 3, 4). Diese Positionierelemente 72 sind beispielsweise als Rippen ausgebildet. Beispielsweise sind, wie in Figur 4 gezeigt, eine Mehrzahl von Rippenpaaren um die Mittelachse 36 verteilt an der Kammerwand 70 angeordnet. Diese Positionierelemente 72 dienen zur Positionierung des Stators 26 bei der Herstellung der Umwälzpumpe 10.

Der Stator 26 umfasst eine magnetische Rückschlusseinrichtung 73 mit einem Rückschlusskörper 74 und Polschuhen. Dieser Rückschlusskörper 74 ist insbesondere einstückig ausgebildet. Er ist vorzugsweise aus einem gepressten Pulvermaterial hergestellt, welches beispielsweise Eisenkörner umfasst, die gegeneinander elektrisch isoliert sind. Ein solches Pulvermaterial ist unter der Bezeichnung "SOMALOY" von der Firma Höganäs, Schweden bekannt. Dadurch lassen sich die Wirbelstromverluste in dem Rückschlusskörper 74 gering halten. Die erforderlichen magnetischen Eigenschaften (große Magnetleitfähigkeit) sind bei einer optimierten geometrischen Gestaltbarkeit des Rückschlusskörpers 74 vorhanden.

Der Rückschlusskörper 74 weist eine Haltebasis 76 auf, welche insbesondere als Ring 78 ausgebildet ist. Über diese Haltebasis 76 ist der Stator 26 an einer Innenseite der Stirnwand 44 positioniert.

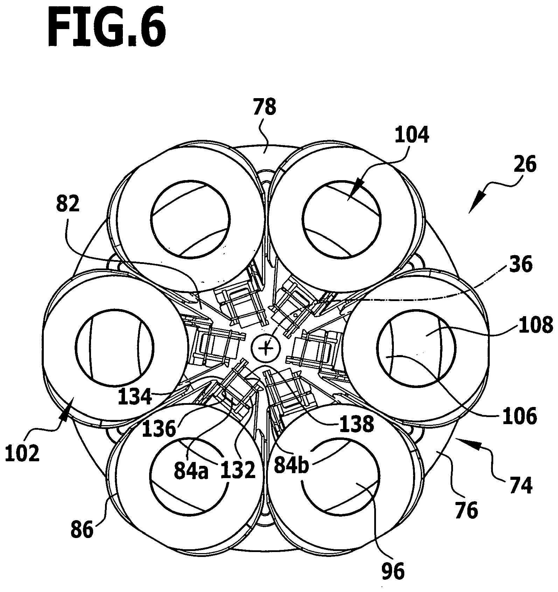

Die Stirnwand 44 weist zu dem Innenraum 22 weisend eine beispielsweise kreisförmige Ausnehmung 80 (Vertiefung) auf (Figur 4). In dieser Ausnehmung 80 ist eine Kontaktplatine 82 angeordnet. Diese Kontaktplatine 82 weist Kontaktstellen 84a, 84b usw. auf (Figur 6), an welchen jeweils eine Spule 86 des Stators 26 elektrisch mit der Kontaktplatine 82 insbesondere über Anschweißung oder Anlötung verbunden ist.

Die Kontaktplatine 82 mit ihren Kontaktstellen 84a, 84b usw. wiederum ist über eine oder mehrere elektrische Verbindungsleitungen 88 (Figur 3) mit der Motorschaltung 16 verbunden. Dazu ist an der Stirnwand 32 und der Stirnwand 44 eine durchgehende Öffnung 90 (Figur 4) angeordnet, über welche die Verbindungsleitung 88 von der ersten Kammer 18 in die zweite Kammer 20 geführt ist. Die Öffnung 90 ist zu dem Zwischenraum 46 hin über eine Außenwand geschlossen.

Zwischen der ersten Kammer 18 und der zweiten Kammer 20 ist ferner eine Verbindungsöffnung 92 vorgesehen (Figur 4). Diese Verbindungsöffnung 92 ist zu dem Zwischenraum 46 hin durch eine Umgebungswand 94 (Figur 3) geschlossen.

An dem Träger 30, welcher wiederum in der zweiten Kammer 20 fixiert ist, sind elektrische Schaltungselemente angeordnet, welche in der zweiten Kammer 20 positioniert sind, und welche luftgekühlt sind. Anders als in den Figuren gezeigt, sind an dem Träger 30 ferner elektronische Leistungsschaltungselemente 38 angeordnet, welche mindestens teilweise in der ersten Kammer 18 positioniert sind. Sie ragen durch die Verbindungsöffnung 92 hindurch in die erste Kammer 18 und stehen in thermischem Kontakt mit dem Stator 26 und insbesondere mit dem Rückschlusskörper 74.

Der Stator 26 lässt sich auf effektive Weise über die Förderflüssigkeit, welche durch die Umwälzpumpe 10 gefördert wird, kühlen. Beispielsweise erreicht der Stator 26 eine Temperatur von ca. 130°C. Durch die Umwälzpumpe 10 gefördertes Wasser erreicht maximal eine Temperatur von ca. 95°C bis 110°C. Derjenige Teil der Motorschaltung 16, der viel Wärme erzeugt (insbesondere elektronische Leistungsschaltungselemente 38), steht über die Verbindungsöffnung 92 in thermischem Kontakt mit dem Stator 26, um die Kühlwirkung der Förderflüssigkeit am Stator 26 zu nutzen.

Die erste Kammer 18 und die zweite Kammer 20 sind dabei über den Zwischenraum 46 durch einen Luftspalt getrennt.

Der Träger 30 ist in einen Niedertemperaturbereich 93a und in einen Hochtemperaturbereich 93b aufgeteilt, wobei der Niedertemperaturbereich 93a luftgekühlt ist und Schaltungselemente des Hochtemperaturbereichs 93b über die Förderflüssigkeit gekühlt sind. Schaltungselemente des Hochtemperaturbereiches 93b stehen in thermischem Kontakt mit dem Stator 26 und ragen in Richtung der ersten Kammer 18 von dem Träger 30 weg. Schaltungselemente des Niedertemperaturbereichs 93a ragen von dem Träger 30 weg in die entgegengesetzte Richtung 95, d.h. von der ersten Kammer 18 weg in Richtung des Deckelelements 42, um für eine effektive thermische Entkopplung zu sorgen. Der Niedertemperaturbereich 93a ist direkt unterhalb des Luftspalts des Zwischenraums 46 angeordnet.

Die Kontaktplatine 82 sitzt unterhalb des Rückschlusskörpers 74 in der Ausnehmung 80.

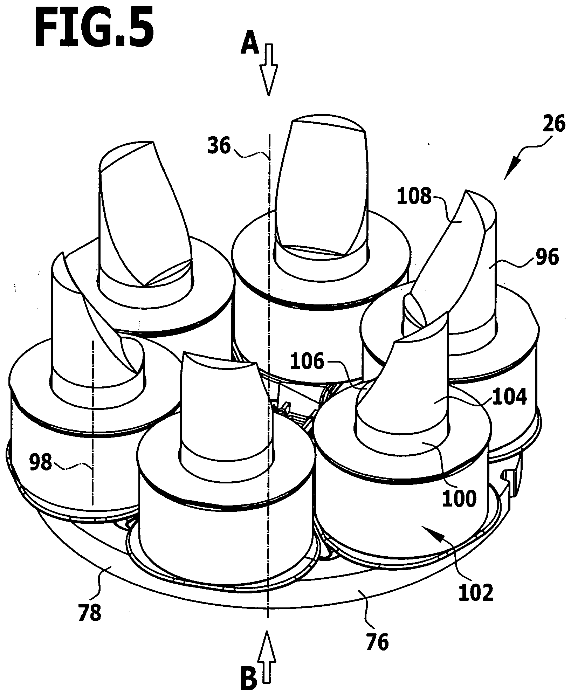

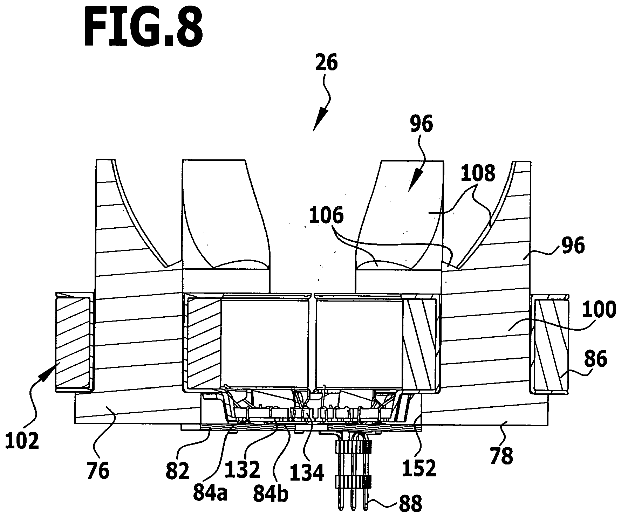

Die Haltebasis 76 ist koaxial zu der Mittelachse 36 ausgerichtet. An der Haltebasis 76 sitzen gleichmäßig verteilt um die Mittelachse 36 eine Mehrzahl von Haltestiften 96 (Figuren 5 bis 8). Die Haltestifte 96 (Haltezähne) weisen alle den gleichen Abstand zu der Mittelachse 36 auf. Ferner weisen benachbarte Haltestifte 96 den gleichen Abstand zueinander auf. Durchstoßpunkte von Achsen 98 der Haltestifte 96 an der Haltebasis 76 definieren ein regelmäßiges Vieleck. Bei dem in Figur 5 gezeigten Ausführungsbeispiel umfasst der Stator 26 sechs Spulen 86. Das regelmäßige Vieleck ist in diesem Beispiel ein Sechseck, wobei der Winkelabstand zwischen benachbarten Haltestiften 96 60° ist. Die Achsen 98 der Haltestifte 96 sind jeweils parallel zur Mittelachse 36 orientiert.

Die Haltestifte 96 sind einstückig mit der Haltebasis 76 verbunden.

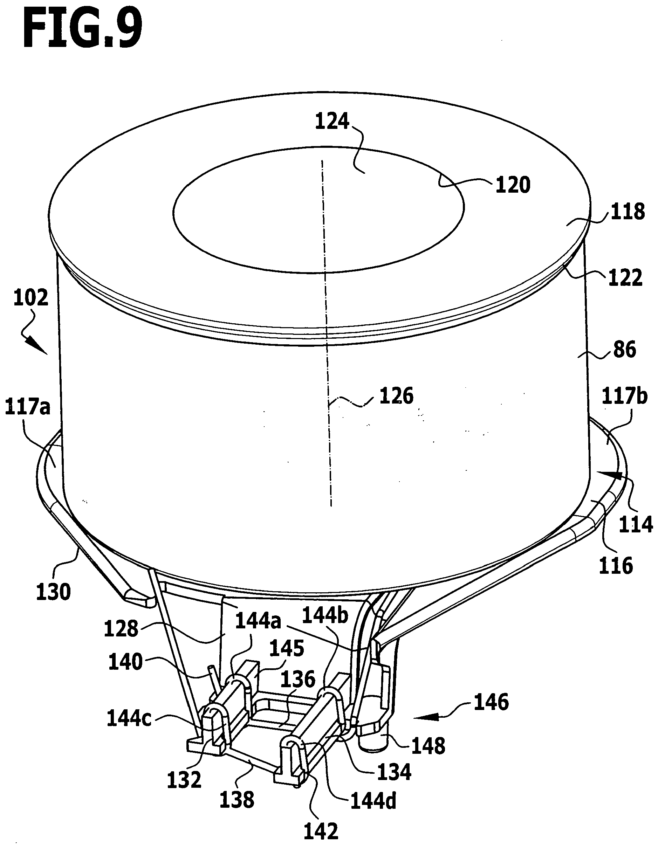

Ein Haltestift 96 weist einen ersten Bereich 100 auf, an welchem ein Spulenmodul 102 (Figur 9) angeordnet ist. Der erste Bereich 100 ist im Wesentlichen zylindrisch ausgebildet. Über diesen ersten Bereich 100 ist ein Haltestift 96 mit der Haltebasis 76 verbunden.

Ferner weist ein Haltestift 96 einen zweiten Bereich 104 auf, welcher oberhalb des ersten Bereichs 100 und oberhalb des jeweiligen Spulenmoduls 102 liegt. Der zweite Bereich 104 weist jeweils einen unteren Flächenbereich 106 auf, welcher im Wesentlichen eben ausgebildet ist und welcher parallel zu der Haltebasis 76 ist. Dieser untere Flächenbereich 106 weist eine Flächennormale auf, welche parallel zur Mittelachse 36 ist.

Der zweite Bereich 104 weist ferner einen sphärischen Flächenbereich 108 auf, wobei die Einhüllende der sphärischen Flächenbereiche 108 aller Haltestifte 96 ein Kugeloberflächenabschnitt ist. Ein Mittelpunkt der zu diesem Kugeloberflächenabschnitt gehörenden Kugel liegt auf der Mittelachse 36. Dieser Mittelpunkt, welcher in Figur 2 mit dem Bezugszeichen 110 angedeutet ist, liegt insbesondere im Mittelpunkt eines konvexen Lagerkörpers 112, über welchen der Rotor 28 sphärisch gelagert ist.

An den jeweiligen Haltestiften 96 sitzen Spulenmodule 102, welche grundsätzlich gleich ausgebildet sind.

Ein Spulenmodul 102 umfasst einen Spulenhalter 114. Der Spulenhalter 114 wiederum weist ein Basiselement 116 und ein Deckelelement 118 auf. Zwischen dem Basiselement 116 und dem Deckelelement 118 ist ein insbesondere hohlzylindrischer Wickelkern 120 angeordnet. Auf diesen Wickelkern 120 ist die jeweilige Spule 86 mit einer Mehrzahl von Windungen 122 gewickelt. Das Deckelelement 118 und das Basiselement 116 sind dabei so ausgebildet, dass sie über eine äußere Begrenzungseinhüllende der Spule 86 hinausragen und damit die Spule 86 nach oben und nach unten hin abdecken.

Das Basiselement 116 (und auch das Deckelelement 118) ist so ausgebildet, dass zu benachbarten Spulen und zu geerdeten Teilen über die entsprechende Luftstrecke der notwendige Abstand hergestellt ist. Beispielsweise umfasst das Basiselement hierzu seitliche Ohren 117a, 117b mittels welchen das Basiselement 116 von einer Kreisscheibengestalt abweicht.

Beispielsweise ist ein Mindestabstand (Luftstrecke) von 3 mm von Metall zu Metall realisiert.

Der Spulenhalter 114 weist eine insbesondere zylindrische Ausnehmung 124 auf, welche als durchgehende Öffnung ausgebildet ist. Die Ausnehmung 124 bildet eine Stiftaufnahme für einen Haltestift 96, welcher durch die Ausnehmung 124 hindurchtauchen kann. Über die Ausnehmung 124 ist das Spulenmodul 102 auf den zugeordneten Haltestift 96 aufsetzbar, um die Spule 86 an dem Stator 26 zu fixieren.

Der Spulenhalter 114 ist in der Art einer Fadenrolle ausgebildet.

Der Spulenhalter 114 ist insbesondere so ausgebildet, dass die Spule 86 an dem Spulenhalter 114 automatisch über eine Wicklungsmaschine herstellbar ist.

Eine Spulenachse 126 ist quer und insbesondere senkrecht zu dem Basiselement 116 und zu dem Deckelelement 118 orientiert. Bei an dem Rückschlusskörper 74 fixiertem Spulenmodul 102 ist die Spulenachse 126 im Wesentlichen parallel zu der Mittelachse 36 und zu der Achse 98 des entsprechenden Haltestifts 96 orientiert. Sie fällt dabei insbesondere mit der Achse 98 des Haltestifts 96 zusammen.

An dem Basiselement 116 des Spulenhalters 114 ist ein Flansch 128 angeordnet, welcher sich von dem Basiselement 116 nach unten erstreckt. Der Flansch 128 weist dabei eine Erstreckungsrichtung auf, welche parallel zur Spulenachse 126 ist. (Der Flansch 128 kann dabei selber parallel zur Spulenachse 126 ausgerichtet sein oder beispielsweise schräg zur Spulenachse 126 angeordnet sein.) Der Flansch 128 ragt dadurch über eine untere Begrenzungsebene 130 hinaus, welche durch das Basiselement 116 definiert ist.

An dem Flansch 128 sitzen ein erster Steg 132 und ein zweiter Steg 134. Der erste Steg 132 und der zweite Steg 134 sind beispielsweise parallel zueinander orientiert. Die beiden Stege 132 und 134 sind quer zur Spulenachse 126 orientiert und insbesondere senkrecht zu dieser. Die beiden Stege 132 und 134 ragen über eine Begrenzungsfläche der Spule 86 an dem Spulenmodul 102 hinaus.

Der erste Steg 132 und der zweite Steg 134 sitzen dabei an oder in der Nähe eines unteren Endes des Flansches 128.

Der Spulenhalter 114 mit seinem Basiselement 116 und seinem Deckelelement 118 ist insbesondere einstückig ausgebildet. Ferner ist der Flansch 128 mit dem ersten Steg 132 und dem zweiten Steg 134 einstückig an dem Spulenhalter 114 angeordnet. Der Spulenhalter 114 ist insbesondere aus einem Kunststoffmaterial hergestellt.

Der erste Steg 132 und der zweite Steg 134 dienen dazu, einen ersten Spulenabschnitt 136 und einen zweiten Spulenabschnitt 138 zu halten, wobei diese beiden Spulenabschnitte 136, 138 quer und insbesondere mindestens näherungsweise senkrecht zu der Spulenachse 126 orientiert sind. Ferner sind der erste Spulenabschnitt 136 und der zweite Spulenabschnitt 138 mindestens näherungsweise auf der gleichen Höhe angeordnet. Sie weisen vorzugsweise eine Einhüllendenebene auf, welche parallel zu der Kontaktplatine 82 orientiert ist, wenn das Spulenmodul 102 an dem Rückschlusskörper 174 positioniert ist.

Der erste Spulenabschnitt 136 und der zweite Spulenabschnitt 138 sind quer zu dem ersten Steg 132 und dem zweiten Steg 134 orientiert. Beispielsweise ist der erste Spulenabschnitt 136 im Wesentlichen senkrecht zu dem ersten Steg 132 und dem zweiten Steg 134 orientiert. Der zweite Spulenabschnitt 138 liegt nicht parallel zum ersten Spulenabschnitt 136, sondern in einem Winkel zu diesem und damit auch in einem kleinen spitzen Winkel (beispielsweise in der Größenordnung von 30°) zu dem ersten Steg 132 und dem zweiten Steg 134. Dazu kann es vorgesehen sein, dass der erste Steg 132 kürzer ausgebildet ist als der zweite Steg 134.

Bei dieser Ausbildung lässt sich bei Bereitstellung einer großen Kontaktfläche eine Mehrzahl von Spulenmodulen 102 verteilt um die Mittelachse 36 an dem Rückschlusskörper 74 anordnen (Figur 6).

Der erste Spulenabschnitt 136 liegt in der Nähe eines ersten Drahtendes 140 der Spule 86. Der zweite Spulenabschnitt 138 liegt in der Nähe eines zweiten Drahtendes 142 der Spule 86.

Der Spulendraht ist an dem ersten Steg 132 und dem zweiten Steg 134 jeweils über eine Wicklung 144a, 144b, 144c, 144d fixiert. So ist der Spulendraht im Bereich des ersten Drahtendes 140 über die Wicklung 144a an dem ersten Steg 132 fixiert. Von dieser Wicklung geht der erste Spulenabschnitt 136 aus, welcher sich zwischen dem ersten Steg 132 und dem zweiten Steg 134 erstreckt. Über die Wicklung 144b ist der Spulendraht dann weiter an dem zweiten Steg 134 fixiert. Von dort aus führt der Spulendraht zu dem Spulenhalter 114.

Im Bereich des zweiten Drahtendes 142 ist der Spulendraht über die Wicklung 144d an dem zweiten Steg 134 fixiert. Ausgehend von dieser Wicklung 144d führt der zweite Spulenabschnitt 138, welcher zwischen dem ersten Steg 132 und dem zweiten Steg 134 liegt, zu der Wicklung 144c, über welche der Spulendraht an dem ersten Steg 132 fixiert ist. Von dieser Wicklung 144c läuft der Spulendraht dann zu dem Spulenhalter 114.

Der erste Steg 132 und der zweite Steg 134 weisen jeweils Ausnehmungen 145 zur Aufnahme der entsprechenden Wicklungen 144a, 144b, 144c, 144d auf.

Dem Spulenmodul 102 ist eine Drehsicherungseinrichtung 146 zugeordnet, über welche sich das Spulenmodul 102 drehfest an dem Rückschlusskörper 74 fixieren lässt. Die Drehsicherungseinrichtung 146 umfasst dazu (mindestens) einen Stift 148, welcher an dem Flansch 128 sitzt und im Wesentlichen parallel zur Spulenachse 126 nach unten ragt.

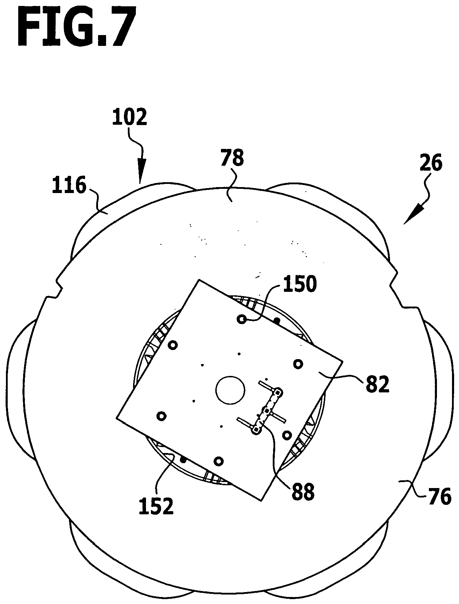

Die Kontaktplatine 82 weist eine dem entsprechenden Spulenmodul 102 zugeordnete Stiftaufnahme 150 auf (Figur 7), in welche der Stift 148 bei korrekter Positionierung des Spulenmoduls 102 an dem zugeordneten Haltestift 96 eingetaucht ist.

Die Haltebasis 76 weist eine Ausnehmung 152 auf. Wenn die Haltebasis 76 als Ring 78 ausgebildet ist, dann ist die Ausnehmung 152 die Ringausnehmung. Der Flansch 128 der jeweiligen Spulenmodule 102 ist in diese Ausnehmung 152 eingetaucht. Der erste Steg 132 und der zweite Steg 134 und damit auch der erste Spulenabschnitt 136 und der zweite Spulenabschnitt 138 des entsprechenden Spulenmoduls 102 sind dadurch in der Ausnehmung 152 positioniert. Nach unten zu der Stirnwand 32 in ist die Ausnehmung 152 durch die Kontaktplatine 82 begrenzt. Die Spulenabschnitte 136 und 138 liegen an den Kontaktstellen 84a, 84b der Kontaktplatine 82 an und sind mit diesen elektrisch verbunden. Die Verbindung ist insbesondere durch Schweißen oder Löten hergestellt.

Über die Verbindungsleitung oder Verbindungsleitungen 88 wiederum ist der elektrische Kontakt zwischen den Kontaktstellen 84a, 84b und der Motorschaltung 16 hergestellt.

Zur Herstellung des Stators 26 wird der Rückschlusskörper 74 insbesondere einstückig aus dem gepressten Pulvermaterial hergestellt.

Getrennt davon werden die Spulenmodule 102 hergestellt. Es werden dabei insbesondere die Spulen 86 an den Spulenhaltern 114 durch Wicklung mittels einer Wicklungsmaschine hergestellt.

Die jeweiligen Spulenmodule 102 werden dann von oben auf die Haltestifte 96 des Rückschlusskörpers 74 aufgesetzt, und zwar derart, dass die Stifte 148 der Spulenmodule 102 in die Stiftaufnahmen 150 der Kontaktplatine 82 (welche zuvor am Rückschlusskörper 74 positioniert wurde) eintauchen können. Dadurch ist eine richtige Ausrichtung der Spulenmodule 102 erreicht.

Die jeweiligen ersten Spulenabschnitte 136 und zweiten Spulenabschnitte 138 sind dabei bei entsprechender Dimensionierung an den jeweiligen Kontaktstellen 84a, 84b positioniert. Die elektrische Verbindung kann dann von oben her durch Schweißen über einen Schweißroboter oder durch Löten erfolgen.

Die Herstellung des Stators 26 lässt sich dadurch mit einem hohen Automatisierungsgrad durchführen.

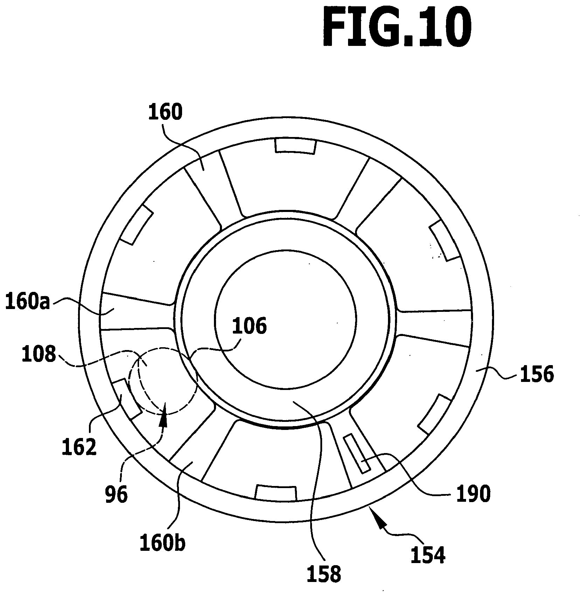

Auf dem Rückschlusskörper 74 mit den Spulenmodulen 102 ist ein Aufsatz 154 aufgesetzt (Figur 10), welcher insbesondere aus einem Kunststoffmaterial hergestellt ist.

Der Aufsatz 154 ist beispielsweise einstückig ausgebildet. Er umfasst ein Ringelement 156, welches auf dem Rückschlusskörper 74 positionierbar ist. Es ist insbesondere auf die Deckelelemente 108 der Spulenmodule 102 aufsetzbar. Das Ringelement 156 ist dann in dem Innenraum 22 der ersten Kammer 18 positioniert.

Innerhalb des Ringelements 156 ist ein Innenelement 158 angeordnet. Das Innenelement ist über entsprechende Anlageflächen an die unteren Flächenbereiche 106 der Haltestifte 96 anlegbar. Durch das Innenelement 158 ist der Zwischenraum zwischen den Spulenmodulen 102 um die Mittelachse 36 abgedeckt.

Das Innenelement 158 ist an dem Ringelement 156 über Zwischenstege 160 gehalten. Die Anzahl der Zwischenstege entspricht dabei der Anzahl der Spulenmodule 102. Bei dem in Figur 10 gezeigten Ausführungsbeispiel sind sechs Zwischenstege 160 entsprechend den sechs vorgesehenen Spulenmodulen 102 vorgesehen. Die Zwischenstege 160 sind gleichmäßig beabstandet zueinander, beispielsweise in einem Winkelabstand von 60°.

Zwischen benachbarten Zwischenstegen 160a, 160b sind an dem Ringelement 156 Positionierelemente 162 angeordnet. Diese Positionierelemente 162 dienen zur Anlage an die zweiten Bereiche 104 der Haltestifte 96 an einer den sphärischen Flächenbereich 108 abgewandten Seite. Über sie lässt sich der Aufsatz 105 an dem Rückschlusskörper 74 zentrieren.

Zwischen benachbarten Zwischenstegen 160a, 160b sind jeweils Polschuhe 164 der magnetischen Rückschlusseinrichtung 73 angeordnet, welche aus magnetisch leitfähigem Material hergestellt sind (Figur 2). Die Anzahl der Haltestifte 96 und die Anzahl der Polschuhe 164 entspricht der Anzahl der Zwischenstege 160. Die Zwischenstege 160 dienen als Anlageelement für die Polschuhe 164 und zur räumlichen Trennung benachbarter Polschuhe 164.

Die Polschuhe 164 sind beispielsweise aus einem gepressten Pulvermaterial hergestellt, welches insbesondere Eisenkörner aufweist, die elektrisch voneinander isoliert sind.

Die Polschuhe 164 haben die Form eines Abschnitts einer Kugelschale, das heißt sie weisen gegenüberliegende sphärische Oberflächen auf. Dadurch weist der Stator 26 dem Rotor 28 zugewandt im Bereich der Polschuhe 164 eine sphärische Oberfläche auf.

Die Polschuhe 164 stehen in mechanischem Kontakt mit den jeweiligen Haltestiften 96, um eine magnetisch leitfähige Verbindung bereitzustellen.

Auf den Polschuhen 164 ist eine Abdeckung 166 (Trennkalotte) angeordnet, welche den Stator 26 fluiddicht von einem Nassraum der Umwälzpumpe 10 trennt. Die Abdeckung definiert eine Trennfläche zwischen dem Stator 26 und dem Rotor 28.

Die Spulenmodule 102 mit den jeweiligen Spulen 86 sind bezogen auf die Mittelachse 86 unterhalb des Rotors 28 und unterhalb des Aufsatzes 154 angeordnet, das heißt eine Einhüllende der Deckelelemente 118 liegt unterhalb des Rotors 28 und unterhalb der Polschuhe 164.

Durch die Abdeckung 166 ist ein Raum 168 in der Umwälzpumpe 10 gebildet, in welchem der Rotor 28 positioniert ist. Dieser Raum 168 hat die Form eines Kugelabschnitts entsprechend einer Halbkugel, welche eine abgeschnittene Polkappe hat.

Der Rotor 28 ist über den Lagerkörper 112 sphärisch gelagert. Der Lagerkörper 112 ist konvex ausgebildet mit einer sphärischen Oberfläche 170. Der Lagerkörper 112 ist an einer Säule 172 drehfest angeordnet. Diese Säule 172 ist auf einer Auswölbung 173 der Abdeckung 166 fixiert und erstreckt sich oberhalb des Innenelements 158 mit koaxialer Ausrichtung zur Mittelachse 36. Der Lagerkörper 112 ist beispielsweise aus einem keramischen Material hergestellt.

Der Rotor 28 umfasst eine konkave Lagerschale 174, welche auf dem Lagerkörper 112 positioniert ist. Durch die Lagerschale 174 und den Lagerkörper 112 ist ein sphärisches Lager bereitgestellt.

Der Rotor 28 ist dem Stator 26 zugewandt sphärisch ausgebildet, wobei ein entsprechender Kugelmittelpunkt mindestens näherungsweise mit dem Mittelpunkt 110 zusammenfällt.

Der Rotor 28 ist magnetfelderzeugend ausgebildet. Dazu weist er ein oder mehrere Permanentmagnete 176 auf.

Zwischen der Abdeckung 166 und dem Rotor 28 ist ein "Luft"-Spalt 178 gebildet, welcher abschnittsweise eine Kugelschalenform hat. Durch diesen Spalt 178 ist Förderflüssigkeit durchströmbar bis zu dem Lagerkörper 112, um für eine Flüssigkeitsschmierung des sphärischen Lagers (gebildet mittels des Lagerkörpers 112 und der Lagerschale 174) zu sorgen.

Der Luftspalt 178 steht dazu in fluidwirksamer Verbindung mit dem Innenraum 56 der Umwälzpumpe 10, in welchem das Schaufelrad 52 rotierbar ist.

Das Schaufelrad 52 ist dabei drehfest mit der Lagerschale 174 verbunden und ist insbesondere oberhalb des Lagerkörpers 112 angeordnet.

Der Elektromotor 14 ist elektronisch kommutiert. Er weist dazu einen Positionsgeber auf, welcher insbesondere auf dem Träger 30 angeordnet ist und Teil der Motorschaltung 16 ist.

Diesem Positionsgeber ist mindestens ein Sensor 180 zugeordnet, welcher zur Ermittlung der Rotorposition dient, um die Spulen 86 des Stator 26 entsprechend ansteuern zu können.

Bei dem Sensor 180 handelt es sich beispielsweise um einen Hall-Sensor.

Der Sensor 180 ist entfernt von dem Rotor 28 angeordnet. Bei dem in Figur 2 gezeigten Ausführungsbeispiel ist er auf einem Zusatzträger 182 angeordnet, welche unterhalb der Spulen 86 sitzt.

Es ist auch möglich, dass der Sensor 180 an dem Träger 30 in der zweiten Kammer 20 angeordnet ist.

Zur Signalwirkankopplung des Sensors 180 und des Rotors 28 ist (mindestens) ein Flussleitelement 184 als Flussleiteinrichtung 185 vorgesehen, über welches ein Rotorsignal von dem Rotor 28 zu dem entfernt angeordneten Sensor 180 übertragen wird; das Flussleitelement 184 sorgt für eine magnetische Flussübertragung von einer Außenseite des Stators 26 her (welche dem Rotor 28 zugewandt ist) zu dem Sensor 180.

Das Flussleitelement 184 ist aus einem paramagnetischen Material und insbesondere Weicheisen hergestellt.

Es weist einen Signalaufnahmebereich 186 auf, welcher mit einer Stirnseite 188 dem Rotor 28 zugewandt ist. Diese Stirnseite 188 ist dabei sphärisch oder zylindrisch ausgebildet. Sie liegt unmittelbar unter der Abdeckung 166.

Insbesondere ist in einem Zwischensteg 160 eine beispielsweise schlitzförmige Ausnehmung 190 gebildet (Figur 10), in welcher der Signalaufnahmebereich 186 angeordnet ist.

Einstückig mit dem Signalaufnahmebereich 186 ist ein Leitbereich 192 verbunden, über welchen sich die Flusssignale von dem Signalaufnahmebereich 186 dem Sensor 180 zuführen lassen.

Der Leitbereich 192 überbrückt den Zwischenraum zwischen dem Signalaufnahmebereich 186 und dem Sensor 180.

Bei dem in Figur 2 gezeigten Ausführungsbeispiel erstreckt sich der Leitbereich 192 im Wesentlichen parallel zur Mittelachse 186 durch den Stator 26 zu dem Sensor 180.

Wenn der Sensor 180 in der zweiten Kammer 20 ausgebildet ist, dann erstreckt sich dieser Leitbereich 192 entsprechend in die zweite Kammer 20.

Das Flussleitelement 184 ist insbesondere als Plättchen ausgebildet mit einer ersten Seite und einer gegenüberliegenden zweiten Seite, zwischen welchen sich das Flussleitelement 184 erstreckt. Die erste Seite und die zweite Seite sind dabei im Wesentlichen eben ausgebildet und liegen parallel zueinander. (In Figur 2 liegen die erste Seite und die zweite Seite parallel zur Zeichenebene.)

Der Signalaufnahmebereich 186 ist vorzugsweise breiter als der Leitbereich 192, um für eine optimierte Signalaufnahme zu sorgen.

Durch die Flussleiteinrichtung 185 lässt sich der Sensor 180 an einer geeigneten Stelle in der Umwälzpumpe 10 positionieren; der Sensor 180 muss nicht mehr in unmittelbarer Nähe des Rotors 28 positioniert werden, um eine optimierte Signalaufnahme zu erhalten, sondern kann an der insbesondere für eine einfache Herstellbarkeit geeigneten Stelle positioniert werden.

Erfindungsgemäß wird eine Umwälzpumpe 10 bereitgestellt, bei welcher ein oder mehrere elektronische Leistungsbauelemente 38, welche eine hohe Wärmeproduktion aufweisen, über thermischen Kontakt mit dem Stator 26 (bereitgestellt über die Verbindungsöffnung 92) mittels Förderflüssigkeit kühlbar sind.

Es wird ein Stator 26 bereitgestellt, welcher sich auf einfache Weise herstellen lässt. Über die Spulenmodule 102 können die Spulen 86 mittels einer Wicklungsmaschine auf automatisierte Weise hergestellt werden. Die Spulenmodule 102 wiederum können mit der Motorschaltung 16 über die Kontaktplatine 82 auf automatisierte Weise insbesondere über Schweißung oder Lötung kontaktiert werden.

Dadurch, dass dem (mindestens) einen Sensor 180 des Positionsgebers des elektrisch kommutierten Elektromotors 14 eine Flussleiteinrichtung 185 zugeordnet ist, lässt sich der Sensor 180 an einer insbesondere für die Herstellung des Elektromotors 14 bzw. der Umwälzpumpe 10 optimierten Position anordnen, wobei während des Betriebs des Elektromotors 14 gute Signalhöhe bereitgestellt ist.

## Patentansprüche

1. Umwälzpumpe, umfassend
- einen Elektromotor (14) mit einem Stator (26), einem Rotor (28) und einer Motorschaltung (16), und
- ein Gehäuse (12), in welchem der Elektromotor (14) angeordnet ist, wobei
- das Gehäuse (12) eine erste Kammer (18) aufweist, in welcher der Stator (26) und der Rotor (28) angeordnet sind, und eine von der ersten Kammer (18) getrennte zweite Kammer (20) aufweist, in welcher mindestens ein Träger (30) positioniert ist, an welchem mindestens ein Teil der Motorschaltung (16) angeordnet ist, und wobei
- die erste Kammer (18) und die zweite Kammer (20) über mindestens eine Verbindungsöffnung (92) verbunden sind, durch welche mindestens ein an dem mindestens einen Träger (30) angeordnetes elektronisches Leistungsschaltelement (38) der Motorschaltung (16) hindurchragt und in thermischem Kontakt mit dem Stator (26) oder mit einem Rückschlusskörper (74) des Stators (26) in der ersten Kammer (18) steht,
- der Stator (26) in der ersten Kammer (18) über Förderflüssigkeit kühlbar ist,
- die zweite Kammer (20) luftkühlbar ist,
der mindestens eine Träger (30) einen Niedertemperaturbereich (93a) und einen Hochtemperaturbereich (93b) aufweist, wobei der Niedertemperaturbereich (93a) luftgekühlt ist und der Hochtemperaturbereich (93b) über Förderflüssigkeit gekühlt ist,
- zwischen der ersten Kammer (18) und der zweiten Kammer (20) ein Zwischenraum (46) liegt, der einen Luftspalt umfasst, und
- der Niedertemperaturbereich (93a) direkt unterhalb des Luftspalts des Zwischenraums (46) angeordnet ist.

2. Umwälzpumpe nach Anspruch 1, **dadurch gekennzeichnet, dass** elektrische Elemente des Niedertemperaturbereichs (93a) an einer Seite des mindestens einen Trägers (30) angeordnet sind, welche der ersten Kammer (18) abgewandt ist.

3. Umwälzpumpe nach einem der vorangehenden Ansprüche, **dadurch gekennzeichnet, dass** elektrische Elemente (38) des Hochtemperaturbereichs (93b) an einer Seite des mindestens einen Trägers (30) angeordnet sind, welche der ersten Kammer (18) zugewandt ist.

4. Umwälzpumpe nach einem der vorangehenden Ansprüche, **dadurch gekennzeichnet, dass** der Zwischenraum (46) zum Außenraum hin offen ist.

5. Umwälzpumpe nach einem der vorangehenden Ansprüche, **dadurch gekennzeichnet, dass** die mindestens eine Verbindungsöffnung (88) gegenüber dem Zwischenraum (46) geschlossen ist.

6. Umwälzpumpe nach einem der vorangehenden Ansprüche, **dadurch gekennzeichnet, dass** die zweite Kammer (20) unterhalb der ersten Kammer (18) liegt.

7. Umwälzpumpe nach einem der vorangehenden Ansprüche, **dadurch gekennzeichnet, dass** die erste Kammer (18) zur zweiten Kammer (20) hin eine Stirnwand (44) aufweist.

8. Umwälzpumpe nach Anspruch 7, **dadurch gekennzeichnet, dass** die zweite Kammer (20) zur ersten Kammer (18) hin eine Stirnwand (32) aufweist, welche beabstandet zur Stirnwand (44) der ersten Kammer (18) ist.

9. Umwälzpumpe nach Anspruch 7 oder 8, **dadurch gekennzeichnet, dass** die Stirnwand (44) der ersten Kammer (18) an einer Innenseite eine Ausnehmung (80) zur Aufnahme einer Kontaktplatine (82) des Stators (26) aufweist.

10. Umwälzpumpe nach einem der vorangehenden Ansprüche, **dadurch gekennzeichnet, dass** das Gehäuse (12) einstückig ausgebildet ist.

11. Umwälzpumpe nach einem der vorangehenden Ansprüche, **dadurch gekennzeichnet, dass** in der ersten Kammer (18) Positionierelemente (72) für den Stator (26) angeordnet sind.

12. Umwälzpumpe nach einem der vorangehenden Ansprüche, **dadurch gekennzeichnet, dass** eine Trennfläche zwischen dem Stator (26) und dem Rotor (28) dem Rotor (28) zugewandt sphärisch ausgebildet ist, wobei insbesondere der Rotor (28) dem Stator (26) zugewandt eine sphärische Oberfläche hat.

13. Umwälzpumpe nach einem der vorangehenden Ansprüche, **dadurch gekennzeichnet, dass** der Rotor (28) über einen oder mehrere Permanentmagnete (176) magnetfelderzeugend ist.

14. Umwälzpumpe nach einem der vorangehenden Ansprüche, **dadurch gekennzeichnet, dass** der Rotor (28) sphärisch gelagert ist.

## Claims

1. Circulating pump, comprising
- an electric motor (14) having a stator (26), a rotor (28) and a motor circuit (16), and
- a housing (12) in which the electric motor (14) is arranged, wherein
- the housing (12) has a first chamber (18) in which the stator (26) and the rotor (28) are arranged and a second chamber (20) separated from the first chamber (18), in which second chamber at least one support (30) is positioned on which at least part of the motor circuit (16) is arranged, and wherein
- the first chamber (18) and the second chamber (20) are connected by means of at least one connection opening (92) through which at least one electronic switching element (38) of the motor circuit (16) arranged on the at least one support (30) protrudes and is in thermal contact with the stator (26) or with a magnetic reflux body (74) of the stator (26) in the first chamber (18),
- the stator (26) in the first chamber (18) can be cooled using pumped liquid,
- the second chamber (20) can be cooled using air,
- the at least one support (30) has a low-temperature area (93a) and a high-temperature area (93b), wherein the low-temperature area is (93a) air-cooled and the high-temperature area (93b) is cooled using pumped liquid,
- there is an intermediate space (46) between the first chamber (18) and the second chamber (20) that comprises an air gap, and
- the low-temperature area (93a) is arranged directly underneath the air gap of the intermediate space (46).

2. Circulating pump according to Claim 1, **characterised in that** electrical elements in the low-temperature area (93a) are arranged on a side of the at least one support (30) that faces away from the first chamber (18).

3. Circulating pump according to any one of the preceding claims, **characterised in that** electrical elements (38) in the high-temperature area (93b) are arranged on a side of the at least one support (30) that faces towards the first chamber (18).

4. Circulating pump according to any one of the preceding claims, **characterised in that** the intermediate gap (46) is open to the exterior space.

5. Circulating pump according to any one of the preceding claims, **characterised in that** the at least one connection opening (88) is closed in the direction of the intermediate space (46).

6. Circulating pump according to any one of the preceding claims, **characterised in that** the second chamber (20) is below the first chamber (18).

7. Circulating pump according to any one of the preceding claims, **characterised in that** the first chamber (18) has a front wall (44) that faces the second chamber (20).

8. Circulating pump according to Claim 7, **characterised in that** the second chamber (20) has a front wall (32) facing the first chamber (18), which front wall is at a distance from the front wall (44) of the first chamber (18).

9. Circulating pump according to either Claim 7 or 8, **characterised in that** the front wall (44) of the first chamber (18) has a recess (80) to receive a contact board (82) of the stator (26) on an inner side.

10. Circulating pump according to any one of the preceding claims, **characterised in that** the housing (12) is formed in one piece.

11. Circulating pump according to any one of the preceding claims, **characterised in that** positioning elements (72) for the stator (26) are arranged in the first chamber (18).

12. Circulating pump according to any one of the preceding claims, **characterised in that** a separation plane is formed in a spherical manner between the stator (26) and the rotor (28) facing the rotor (28), wherein the rotor (28) has in particular a spherical surface facing the stator (26).

13. Circulating pump according to any one of the preceding claims, **characterised in that** the rotor (28) can generate magnetic fields as a result of one or more permanent magnets (176).

14. Circulating pump according to any one of the preceding claims, **characterised in that** the rotor (28) is spherically journaled.

## Revendications

1. Pompe de circulation, comprenant
- un moteur électrique (14) pourvu d'un stator (26), d'un rotor (28) et d'un circuit de moteur (16), et
- un carter (12) dans lequel est disposé le moteur électrique (14),
- le carter (12) possédant une première chambre (18), dans laquelle sont disposés le stator (26) et le rotor (28), et une deuxième chambre (20) séparée de la première chambre (18), dans laquelle est positionné au moins un élément porteur (30) sur lequel est disposée au moins une partie du circuit de moteur (16), et
- la première chambre (18) et la deuxième chambre (20) étant reliées par le biais d'au moins une ouverture de liaison (92) à travers laquelle fait saillie au moins un élément de commutation de puissance (38) du circuit de moteur (16) disposé sur l'au moins un élément porteur (30) et qui se trouve en contact thermique avec le stator (26) ou avec un corps de reflux magnétique (74) du stator (26) dans la première chambre (18),
- le stator (26) dans la première chambre (18) pouvant être refroidi par le biais du liquide refoulé,
- la deuxième chambre (20) pouvant être refroidie par air,
l'au moins un élément porteur (30) possédant une zone de basse température (93a) et une zone de haute température (93b), la zone de basse température (93a) étant refroidie par air et la zone de haute température (93b) étant refroidie par le liquide refoulé,
- un espace intermédiaire (46), qui comporte un entrefer, se trouvant entre la première chambre (18) et la deuxième chambre (20), et
- la zone de basse température (93a) est disposée directement au-dessous de l'entrefer de l'espace intermédiaire (46).

2. Pompe de circulation selon la revendication 1, **caractérisée en ce que** les éléments électriques de la zone de basse température (93a) sont disposés sur un côté de l'au moins un élément porteur (30) qui se trouve à l'opposé de la première chambre (18).

3. Pompe de circulation selon l'une des revendications précédentes, **caractérisée en ce que** les éléments électriques (38) de la zone de haute température (93b) sont disposés sur un côté de l'au moins un élément porteur (30) qui fait face à la première chambre (18).

4. Pompe de circulation selon l'une des revendications précédentes, **caractérisée en ce que** l'espace intermédiaire (46) est ouvert vers l'espace extérieur.

5. Pompe de circulation selon l'une des revendications précédentes, **caractérisée en ce que** l'au moins une ouverture de liaison (88) est fermée par rapport à l'espace intermédiaire (46).

6. Pompe de circulation selon l'une des revendications précédentes, **caractérisée en ce que** la deuxième chambre (20) se trouve au-dessous de la première chambre (18).

7. Pompe de circulation selon l'une des revendications précédentes, **caractérisée en ce que** la première chambre (18) possède une paroi frontale (44) vers la deuxième chambre (20).

8. Pompe de circulation selon la revendication 7, **caractérisée en ce que** la deuxième chambre (20) possède une paroi frontale (32) vers la première chambre (18), laquelle est espacée de la paroi frontale (44) de la première chambre (18).

9. Pompe de circulation selon la revendication 7, **caractérisée en ce que** la paroi frontale (44) de la première chambre (18) possède sur un côté intérieur une cavité (80) destinée à accueillir une platine de contact (82) du stator (26).

10. Pompe de circulation selon l'une des revendications précédentes, **caractérisée en ce que** le carter (12) est réalisé d'un seul tenant.

11. Pompe de circulation selon l'une des revendications précédentes, **caractérisée en ce que** des éléments de positionnement (72) pour le stator (26) sont disposés dans la première chambre (18).

12. Pompe de circulation selon l'une des revendications précédentes, **caractérisée en ce qu'**une surface de séparation entre le stator (26) et le rotor (28) est de configuration sphérique faisant face au rotor (28), le rotor (28) faisant face au stator (26) ayant notamment une surface sphérique.

13. Pompe de circulation selon l'une des revendications précédentes, **caractérisée en ce que** le rotor (28) est générateur de champ magnétique par le biais d'un ou plusieurs aimants permanents (176).

14. Pompe de circulation selon l'une des revendications précédentes, **caractérisée en ce que** le rotor (28) est supporté de manière sphérique.
